(19) Europäisches Patentamt
European Patent Office
Office européen des brevets

(11) **EP 2 277 294 B1**

(12) **EUROPEAN PATENT SPECIFICATION**

(45) Date of publication and mention of the grant of the patent:
**06.04.2016 Bulletin 2016/14**

(21) Application number: **09730544.5**

(22) Date of filing: **10.04.2009**

(51) Int Cl.:
*H04L 27/26* (2006.01)    *H04B 7/06* (2006.01)
*H04J 11/00* (2006.01)

(86) International application number:
**PCT/CN2009/071233**

(87) International publication number:
**WO 2009/124513 (15.10.2009 Gazette 2009/42)**

(54) **A RESOURCE BLOCK BASED PILOT PATTERN DESIGN FOR 1/2-STREAM MIMO OFDMA SYSTEMS**

AUF RESSOURCENBLÖCKEN BASIERENDES PILOTMUSTERDESIGN FÜR ½-STREAM-MIMO-OFDMA-SYSTEME

CONCEPTION DE MOTIF PILOTE BASÉE SUR UN BLOC DE RESSOURCE POUR DES SYSTÈMES OFDMA MIMO À FLUX 1/2

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **10.04.2008   US 43760**
**02.05.2008   US 49786**
**26.06.2008   US 75876**
**05.09.2008   US 94504**
**30.10.2008   US 109546**
**02.03.2009   US 156576**
**08.04.2009   US 384762**

(43) Date of publication of application:
**26.01.2011   Bulletin 2011/04**

(73) Proprietor: **MediaTek Inc.**
**Hsin-Chu 300 (TW)**

(72) Inventors:
• **LIN, Chih yuan**
**Taiwan 268 (CN)**
• **LIAO, Pei kai**
**Taiwan 551 (CN)**

(74) Representative: **2K Patentanwälte Blasberg Kewitz & Reichel Partnerschaft mbB Schumannstrasse 27 60325 Frankfurt am Main (DE)**

(56) References cited:
**WO-A1-2006/110259      WO-A1-2007/149722**
**WO-A2-2007/098450      CN-A- 101 043 501**
**US-A1- 2004 131 007      US-A1- 2007 040 703**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF INVENTION

The disclosed embodiments relate generally to wireless network communications, and, more particularly, to pilot symbol pattern design in orthogonal frequency division multiple access (OFDMA) transmission systems.

BACKGROUND OF THE INVENTION

Orthogonal Frequency-Division Multiple Access (OFDMA) is a multi-user version of the Orthogonal Frequency-Division Multiplexing (OFDM) digital modulation technology. OFDM is a special case of FDM, wherein multiple subcarriers carry the information stream and are orthogonal to each other. The orthogonality allows simultaneous transmission on multiple subcarriers without interference from each other. In OFDMA Multiple Access is achieved by assigning subsets of subcarriers to individual users and thereby allowing simultaneous low data rate transmission for several users.

In most wireless systems, however, multipath is an undesirable common propagation phenomenon that results in radio signals reaching the receiving antenna by two or more paths. The effects of multipath include constructive and destructive interference, amplifying or attenuating the signal power seen at the receiving antenna. Multipath may also cause phase shifting of the signal. Signal variations in amplitude or phase resulted from multipath are also referred as channel response. If the receiver is able to estimate the channel response, then signal degradations caused by multipath effect can be compensated. Thus, to facilitate channel response estimation, OFDMA systems periodically insert pilot symbols, whose values are known to the receiver, into the transmission signal,

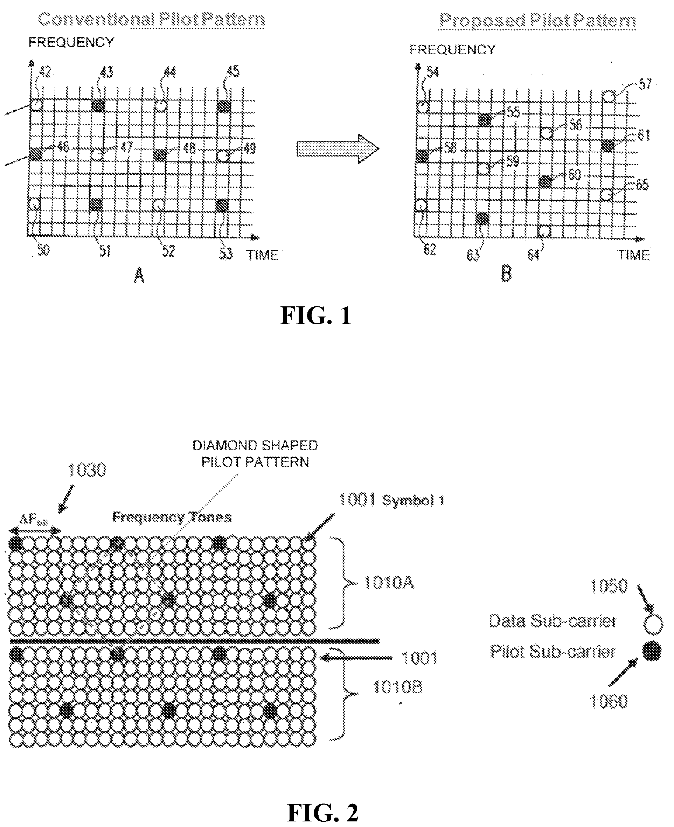

The number and the position of pilot symbols to be inserted into the transmission signal in frequency domain and time domain is referred as pilot pattern. Various techniques exist in prior art for providing pilot pattern design in an OFDM system. For example, US Patent Application No. 2006/0120272 describes a transmitting device for transmitting data symbols and pilot symbols in an OFDM system. As shown in Figure 1 (prior art), two types of pilot symbols are orthogonal to each other and they are transmitted alternatively in frequency domain as well as in time domain.

US Patent Application No. 2006/0285484 proposes a diamond-shaped pilot pattern to achieve accurate channel estimates for high user equipment speeds while also posses the ability to use substantial pilot energy from succeeding frame with minimum latency. This improved pilot pattern is illustrated in Figure 2 (prior art).

US Patent Application No. 2006/0209732 describes a pilot pattern design method. As shown in Figure 3 (prior art), the proposed OFDM wireless system can change pilot patterns based on frequency selectivity and Doppler shift information.

US Patent Application No. 2007/0195688 describes spatial pilot structure for multi-antenna and multi-layer transmission wireless communications systems. In one example, a single-layer pilot pattern is extended to multi-layer pilot pattern for multi-input and multi-output (MIMO) receivers.

In OFDMA wireless systems, a resource block is defined as a two-dimensional block comprising a number of consecutive sub-carriers (also referred as frequency tones) by a number of consecutive OFDM symbols (also referred as time slots). IEEE 802.16m defines 5-symbol resource block as 18 sub-carriers by 5 OFDM symbols, 6-symbol resource block as 18 sub-carriers by 6 OFDM symbols, and 7-symbol resource block as 18 sub-carriers by 7 OFDM symbols. They are the smallest unit that can be assigned to a user of a mobile station (MS). Small sized resource blocks have better real time characteristics and they are targeted for VoIP or other small-packet application.

Pilot patterns proposed in the prior arts, however, are designed without consideration of the resource block size. Thus, in OFDMA systems, it is desirable to address optimal pilot pattern design based on predefined resource block size.

US 2007 040 703 A relates to techniques for transmitting configurable pilots in a wireless communication system. The placement of pilots is determined based on an assignment of resources for transmission. Different placements of pilots are used for different assignments of resources. The assignment may be for one or more frames and/or one or more H-ARQ interlaces. The placement of pilat(s) in each frame or H-ARQ interlace may be determined based on the placement of pilot(s) in prior frame(s) or H-ARQ interlace(s). Pilots are sent at time and frequency locations determined by the placement of the pilots. Each pilot may be sent on one or more subcarriers in one or more symbol periods. The pilots may be TDM pilots and/or some other type of pilot. The pilots may be sent using IFDMA, LFDMA, EFDMA, OFDMA, or some other multiplexing scheme. However, US 2007 040 703 A fails to disclose the distinguishing features in the characterizing part of claim 1.

SUMMARY OF THE INTENTION

In OFDMA wireless communications systems, pilot symbols are used to facilitate channel response estimation. The number and the position of pilot symbols to be inserted into the transmission signal in frequency domain and time domain is referred as pilot pattern. In the disclosed embodiments, pilot pattern design is optimized based on predefined resource block size. The number of pilots and the spacing between pilots within a resource block is determined using 2-D sampling theory based on a set of system requirements such as Doppler spread, delay spread, peak data rate, and throughput. This problem is solved by the wireless communications method according to claim 1. Further advantageous embodiments are the subject-matter of the dependent claims.

In a first novel aspect, pilots are allocated within a resource block to avoid channel extrapolation in both frequency domain and time domain. First, four pilots are positioned near four corners of the resource block. Next, the remaining pilots are evenly distributed within the resource block along both the frequency domain and the time domain. Finally, it is verified that an approximately equal number of pilots are evenly distributed along the time domain with respect to each data stream to minimize power fluctuation. For uplink transmission, one or more frequency tones at one or more edges of the resource block are reserved to be pilat-free to reduce multiuser synchronization error effect.

Small-size resource blocks are generally used in uplink feedback channel and sometimes in uplink data transmission. In a second novel aspect, if resource block size is smaller than three in either frequency or time domain, then the pilots are allocated such that average pilot-to-data distance is minimized and that pilot-to-pilot distance is as large as possible. In one example, m pilots are allocated in an ixj resource block. The resource block is partitioned into n equal sub blocks, where m is a multiple of n. Within each partitioned sub-block, m/n pilots are positioned such that average pilot-to-data distance is minimized. If the number of frequency tones are larger than three and i is a multiple of n, then the resource block is partitioned along the frequency domain; and if the number of time slots is larger than three and j is a multiple of n, then the resource block is partitioned along the time domain. On the other hand, if resource block size is larger than or equal to three in both frequency and time domain, then pilots are allocated to avoid channel extrapolation.

High-rank MIMO systems are systems having at least four data streams. Because high-rank MIMO supports only low-mobility environment, time-domain extrapolation is no longer a dominant factor in pilot pattern design. In a third novel aspect, in a high-rank MIMO system, pilots are allocated within a resource block to avoid channel extrapolation in frequency domain only. As a general rule, two pilots are first positioned near two edges of the resource block in frequency domain to avoid frequency-domain channel extrapolation. The remaining pilots are then equally spaced in between the allocated two pilots along frequency domain. In addition, it is verified that an approximately equal number of pilots are evenly distributed along the time domain with respect to each data stream to minimize power fluctuation. For uplink transmission, one or more frequency tones at one or more edges of the resource block are reserved to be pilot-free to reduce multiuser synchronization error effect. When continuous resource blocks are jointly used for channel estimation, the upper and lower edges of each resource block are left with blanks such that edge pilots of adjacent resource blocks are not too close to each other to improve channel estimation.

Other embodiments and advantages are described in the detailed description below. This summary does not purport to define the invention. The invention is defined by the claims.

## BRIEF DESCRIPTION OF THE DRAWINGS

The accompanying drawings, where like numerals indicate like components, illustrate embodiments of the invention.

Figure 1 (Prior Art) illustrates pilot symbols that are orthogonal to each other and are transmitted alternatively in frequency domain and in time domain.
Figure 2 (Prior Art) illustrates a diamond-shaped pilot pattern to achieve accurate channel estimation.

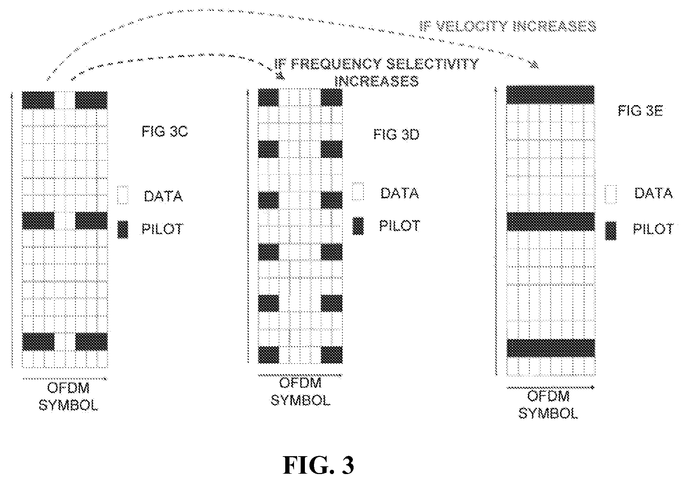

Figure 3 (Prior Art) illustrates an OFDM wireless system that changes pilot patterns based on frequency selectivity and Doppler shift information.
Figure 4A is a block diagram that illustrates an OFDMA wireless system with uplink transmission.
Figure 4B is a block diagram that illustrates an OFDMA wireless system with downlink transmission.
Figure 5 is a flow chart of a method of pilot pattern design based on resource block size in an OFDMA communications system in accordance with a first novel aspect.
Figure 6A is an example of pilot pattern design based on an 18x6 resource block.
Figure 6B and Figure 6C illustrate examples of pilot pattern design based on an 18x6 resource block in uplink transmission.
Figure 7 illustrates pilot collision caused by multiuser synchronization error.
Figure 8A is an example of pilot pattern design based on a 6x6 resource block.
Figure 8B- Figure 8E illustrate examples of pilot pattern design based on a 6x6 resource block in uplink transmission.
Figure 9A and Figure 9B illustrate examples of pilot pattern design based on a 6x5 and a 6x7 resource block.
Figure 10 is a flow chart of a method of pilot pattern design based on small resource block size in an OFDMA communications system in accordance with a second novel aspect.
Figure 11A and Figure 11B illustrate examples of pilot pattern design based on a 2x6 and a 6x2 resource block in a SISO system.

Figure 12A and Figure 12B illustrate examples of pilot pattern design based on a 4x6 and a 6x4 resource block in a two-stream MIMO system.

Figure 13A and Figure 13B illustrate examples of pilot pattern design based on a 4x6 and a 6x4 resource block in a SISO system.

Figure 14 is a flow chart of a method of pilot pattern design in a high-rank MIMO system in accordance with a third novel aspect.

Figure 15A illustrates an example of pilot pattern design based on an 18x6 resource block in a four-stream MIMO system.

Figure 15B and Figure 15C illustrate examples of pilot pattern design based on an 18x6 resource block in a four-stream MIMO system in uplink transmission.

Figure 16A illustrates an example of pilot pattern design based on an 18x6 resource block in an eight-stream MIMO system.

Figure 16B illustrates an example of pilot pattern design based on an 18x6 resource block in an eight-stream MIMO system in uplink transmission.

Figure 17A and Figure 17B illustrate examples of pilot pattern design based on an 18x5 and an 18x7 resource block in an eight-stream MIMO system.

Figure 18 illustrates an example of pilot pattern design based on a 36x6 resource block in an eight-stream MIMO system.

Figure 19 illustrates an example of pilot pattern design using continuous resource blocks in an eight-stream MIMO system.

Figure 20A and Figure 20B illustrate examples of pilot pattern design using continuous resource blocks in an eight-stream MIMO system.

## DETAILED DESCRIPTION

Reference will now be made in detail to some embodiments of the invention, examples of which are illustrated in the accompanying drawings.

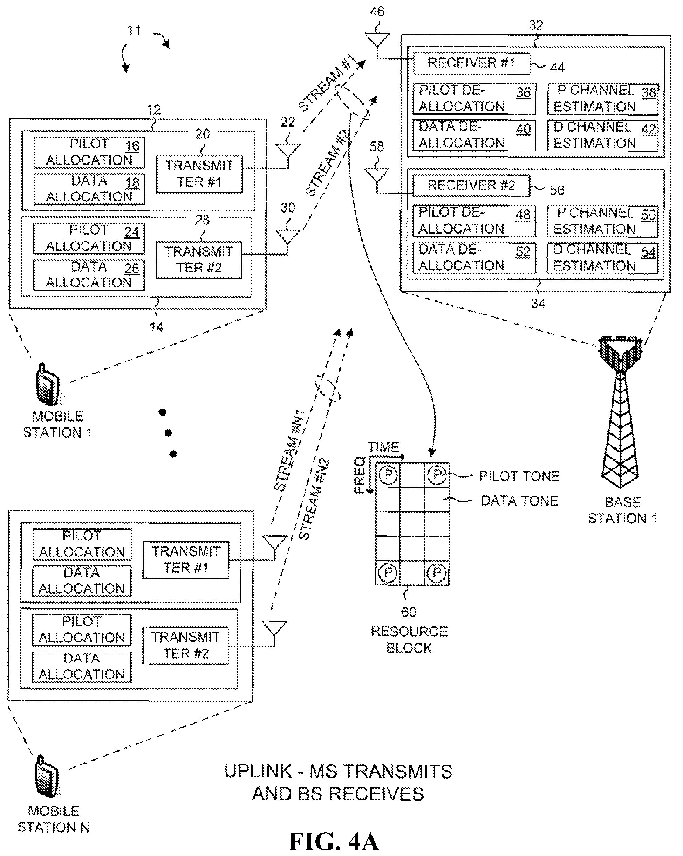

Figure 4A is a block diagram that illustrates an Orthogonal Frequency-Division Multiplexing Access (OFDMA) wireless communications system 11 in uplink transmission. OFDMA system 11 comprises a plurality of mobile stations MS1, MS2 ... MSN and a base station BS1. Mobile station MS1 comprises a first transmission module 12 and a second transmission module 14. Transmission module 12 comprises a pilot allocation module 16, a data allocation module 18, and a transmitter 20 that is coupled to an antenna 22. Similarly, transmission module 14 comprises a pilot allocation module 24, a data allocation module 26, and a transmitter 28 that is coupled to an antenna 30. Base station BS1 comprises a first receiving module 32 and a second receiving module 34. Receiving module 32 comprises a pilot de-allocation module 36, a pilot-tone channel estimation module 38, a data de-allocation module 40, a data-tone channel estimation module 42, and a receiver 44 that is coupled to an antenna 46. Similarly, receiving module 34 comprises a pilot de-allocation module 48, a pilot-tone channel estimation module 50, a data de-allocation module 52, a data-tone channel estimation module 54, and a receiver 56 that is coupled to an antenna 58.

In uplink transmission, mobile stations in OFDMA system 11 transmit data streams to be received by base station BS1. Each stream is transmitted using a two-dimensional (2D) resource block comprising a number of consecutive sub-carriers (also referred as frequency tones) and a number of consecutive OFDM symbols (also referred as time slots). As illustrated in Figure 4A, in a multi-input and multi-output (MIMO) system, mobile station MS1 transmits stream #1 from antenna 22 and stream #2 from antenna 30, and both streams are transmitted using the same resource block 60 comprising five consecutive frequency tones and three consecutive time slots. Each stream includes both pilot tones and data tones that are allocated by pilot allocation modules 16 or 24 and data allocation module 18 or 26 respectively. When base station BS1 receives stream #1 and stream #2 from MS1, its receiving modules perform pilot channel estimation followed by data channel estimation. In the example of Figure 4A, pilot de-allocation module 36 or 48 de-allocates the pilot tones and pilot channel estimation module 38 or 50 performs pilot-tone channel estimation based on the received pilot tones. In addition, data de-allocation module 40 or 52 de-allocates the data tones and data-tone channel estimation module 42 or 54 performs interpolation or extrapolation for the received data tones.

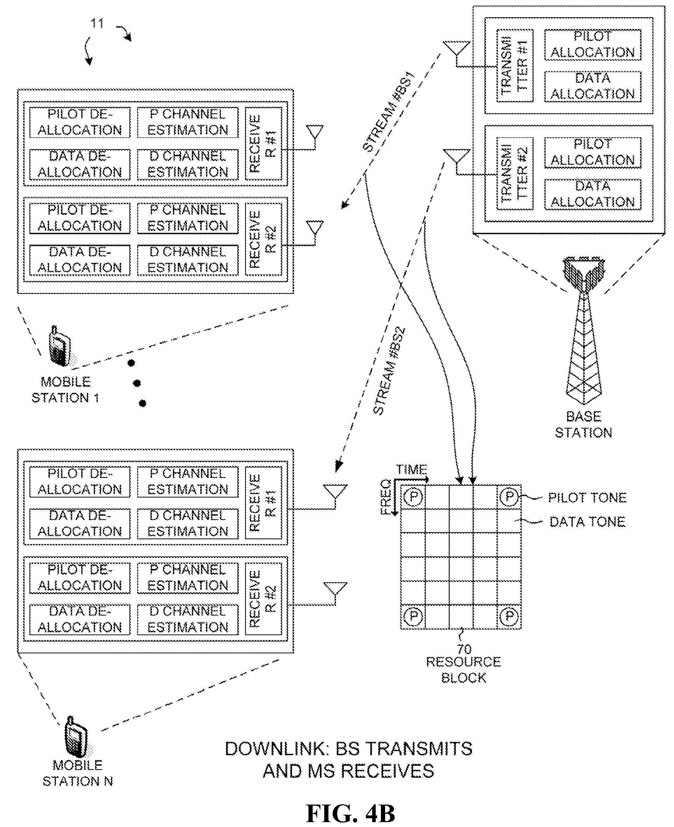

Figure 4B is a block diagram that illustrates OFDMA wireless communications system 11 in downlink transmission, when base station BS1 transmits data streams to be received by mobile stations MS1 to MSN. As illustrated in Figure 4B, base station BS1 comprises transmission modules to allocate and transmit pilot and data tones, while mobile station MS1 comprises receiving modules to receive, de-allocate, and performs channel estimation for pilot and data tones. Similar to uplink transmission, each stream is transmitted using a 2D resource block comprising a consecutive number of frequency tones and time slots. In the example of Figure 4B, stream #BS1 and stream #BS2 containing both data tones and pilot tones, are transmitted by a resource block 70 comprising six consecutive frequency tones and five consecutive time slots.

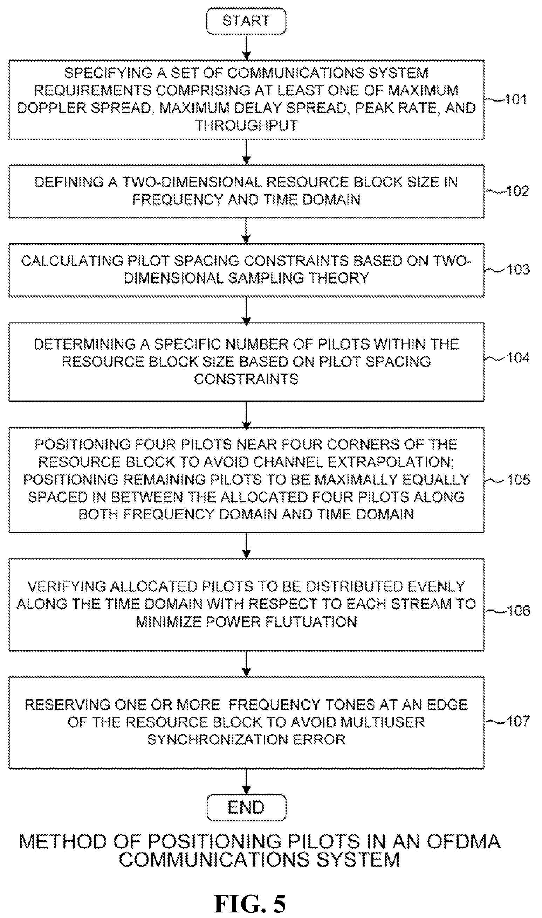

Figure 5 is a flow chart of a method of pilot pattern design based on resource block size in accordance with a first novel aspect. In an OFDMA wireless communications system, pilot tones (also referred as pilot symbols) are periodically inserted into transmission signals to facilitate channel response estimation. The number and the position of pilot tones to be inserted in frequency domain and time domain is referred as pilot pattern. As illustrated in Figure 5, pilot pattern design starts with specifying a set of communications system requirements such as Doppler spread, delay spread, peak rate, throughput, etc. (step 101). The system requirements, with two design examples, are listed in the following Table 1. In the first design example for OFDMA System 1A, a resource block of 18x6 (18 frequency tones and 6 time slots) is defined, and in the second design example for OFDMA System 1B, a resource block of 6x6 (6 frequency tones and 6 time slots) is defined (step 102).

Table 1 System Requirements

| System Parameters | System 1A | System 1B |
|---|---|---|
| Type of System | MIMO | MIMO |
| Number of streams in resource block | 2 | 2 |
| Center frequency | 2.5GHz | 2.5GHz |
| Bandwidth | 10MHz | n/a |
| Peak rate | 8 bps/Hz | 5.6 bps/Hz |
| Max channel delay spread ($\tau_{max}$), | $12\mu s$ | $12\mu s$ |
| Max velocity (Doppler shift $f_{D,max}$); | 350km/h (810Hz) | 350km/h (810Hz) |
| Sub-carrier spacing ($\Delta f$); | 10.94kHz | 10.94kHz |
| OFDM symbol length ($T_{symbol}$); | $102.82\ \mu s$ | $102.82\ \mu s$ |
| Resource block size | 18x6 | 6x6 |
| Number of Pilots per stream | 6 | 4 |

In step 103, pilot spacing constraints are calculated based on 2D sampling theory using delay spread and Doppler spread. The maximum time delay that occurs of a transmission signal is called delay spread of the signal in a certain environment. The optimal spacing between pilots in frequency domain can be determined by the delay spread. The difference in Doppler shifts between different signal components contributing to a single fading channel tap is known as Doppler spread. The optimal spacing between pilots in time domain can be determined by the Doppler spread. In summary, using 2D sampling theory, space between pilots in time domain ($N_t$) and in frequency domain ($N_f$) must meet the following formulas:

$$N_t \ll \frac{1}{2f_{D,max}T_{symbol}}$$

$$N_f \ll \frac{1}{\tau_{max}\Delta f}$$

Thus, in order to estimate the channel response in the specified environment using pilot tones, $N_t$ is the maximum space allowed between pilots in time domain and $N_f$ is the maximum spacing allowed between pilots in frequency domain. In the examples of System 1A and System 1B, $N_t$ equals to six ($N_t = 1/(2\text{x}810\text{x}102.82\text{x}10^{-6}) = 6$), and $N_f$ equals to eight ($N_f = 1/(12\text{x}10^{-6}\text{x}10.94\text{x}10^3) = 7.6$).

For a predefined resource block, the number of the pilots to be inserted into the resource block can then be determined based on the pilot spacing constraints calculated in step 103 as well as the peak rate and throughput requirement (step 104). In the first example of System 1A, the maximum allowed number of pilots for each stream is eighteen in order to satisfy the peak rate requirement. Because the maximum required pilot spacing in frequency domain is eight ($N_f = 8$) and the maximum required pilot spacing in time domain is six ($N_t = 6$), for an 18x6 resource block in System 1A, there needs to be at least four pilots along the frequency domain and two pilots along the time domain. In addition, to achieve maximal throughput, the total number of pilots to be allocated within the 18x6 resource block is chosen to be six for each stream. Similarly, in the second example of System 1B, the maximum allowed number of pilots for each stream is nine in order to achieve the peak rate requirement. Thus, for a 6x6 resource block in System 1B, there needs to be at least two pilots along the frequency domain and two pilots along the time domain. In addition, to achieve maximal throughput, the total number of pilots to be allocated in a 6x6 resource block is chosen to be four for each stream.

Once the number of pilots to be inserted into a predefined resource block is determined, the pilots are then positioned into certain locations within the resource block to avoid channel extrapolation (step 105). When pilots are used for channel response estimation in time domain and frequency domain, an extrapolation using previous pilot symbols may be performed. Alternatively, an interpolation using the nearest pilot symbols or a linear interpolation using previous and subsequent pilot symbols may be performed. It is well known that extrapolation degrades channel estimation quality especially when a mobile station moves (for example, in a car) with a non-negligible speed, as compared to interpolation. Therefore, extrapolation should be prevented as much as possible while keeping similar pilot overhead and channel response estimation complexity.

In general, channel extrapolation can be prevented or limited by allocating pilots at resource block boundaries in both time and frequency domains. When positioning pilot symbols close to edges of a resource block, pilot symbols frame most the data symbols. As a result, most data symbols would have a previous symbol and a subsequent symbol required to perform channel interpolation.

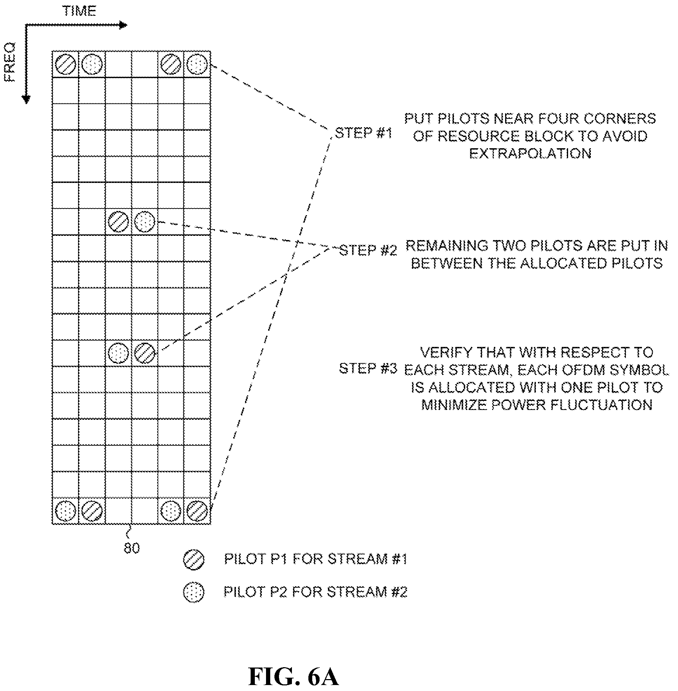

Figure 6A illustrates an example of pilot pattern based on an 18x6 resource block 80 in System 1A to achieve optimal channel response estimation. In the example of Figure 6A, two data streams stream# 1 and stream#2 are transmitted by resource block 80 having eighteen consecutive frequency tones and six consecutive time slots. As described above with respect to step 104 of Figure 5, a total number of six pilots are to be allocated, and there need to be at least four pilots along the frequency domain and at least two pilots along the time domain for each data stream within the 18x6 resource block. As illustrated in Figure 6A, according to step 105 of Figure 5, four pilots are first allocated near four corners of resource block 80 to avoid channel extrapolation for each data stream (step #1). The remaining two pilots are then maximally equally spaced in between the allocated four pilots along the frequency domain and the time domain for each data stream (step #2). Optimal channel response estimation is thus achieved by this novel pilot pattern design.

Going back to Figure 5, it is further verified that the allocated pilots are evenly distributed along the time domain for each data stream (step 106). This is because when power boosting is applied for transmitting pilot symbols, multiple pilots allocated on the same time slot typically introduce significant power fluctuation. Thus, as illustrated in Figure 6A, it should be verified that with respect to each data stream, each time slot has no more than one pilot allocated such that power fluctuation is minimized (step #3).

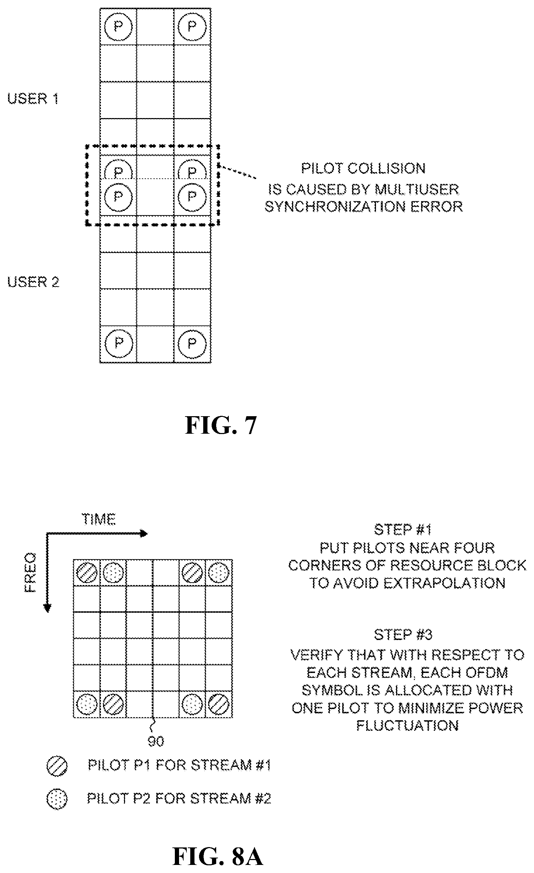

Figure 7 illustrates pilot symbol collision due to multiuser synchronization error. In a broadband multiuser environment, an OFDM/OFDMA based system has strong advantage in attaining high spectral efficiency, particularly for downlinks, as it has the advantage in using low complexity frequency-domain equalizers if the channel does not change much during one OFDM symbol. For uplinks, however, it is not apparent that OFDMA would be an appropriate solution in the multiuser uplink scenario, because accurate uplink multiuser frequency synchronization is a challenging task.

As illustrated in Figure 7, when frequency synchronization error occurs in a multiuser uplink scenario, the last frequency tone in a resource block would collide with the first frequency tone in a subsequent resource block. As a result, the pilots at the boundary of a resource block would not be distinguishable when uplink synchronization error occurs. Thus, pilots allocated at the boundaries of two adjacent resource blocks would not be recoverable due to multiuser collision. This would significantly affect channel estimation and prediction in a multiuser uplink transmission. Therefore, it is critical to insure a reliable pilot transmission by avoiding pilot collision due to synchronization error.

Going back to Figure 5, to avoid pilot collision due to multiuser synchronization error, when pilot symbols are allocated for uplink transmission, a buffer region is reserved at one or more edges of each resource block (step 107). This effectively avoids pilot collision if the first frequency tone in a resource block overlaps with the last frequency tone of the adjacent resource block in frequency domain due to frequency synchronization errors.

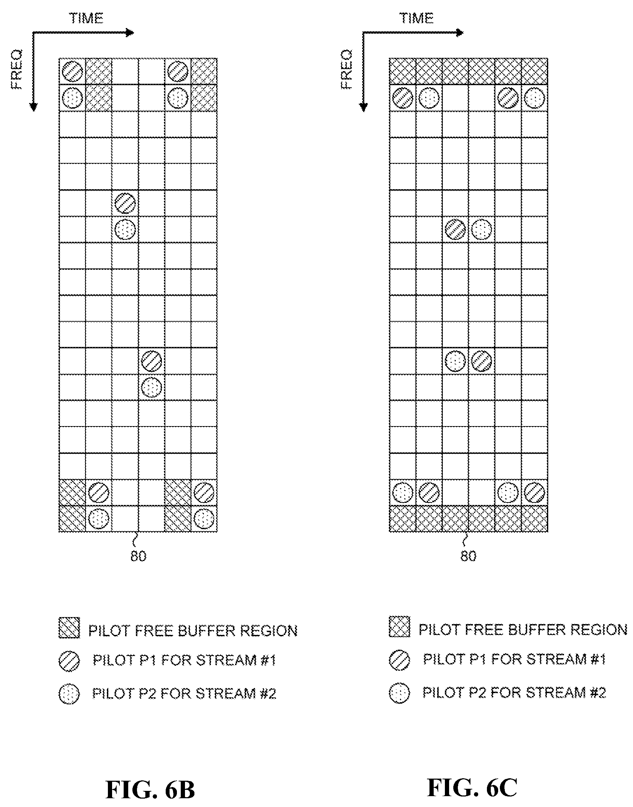

Figure 6B illustrate an example of reserving buffer regions at one or more edges of resource block 80. In the example of Figure 6B, the buffer regions adjacent to pilot tones in resource block 80 were reserved to be pilot-free where no pilots are allocated. When frequency synchronization error occurs, the first two frequency tones may interfere with the last two frequency tones of the adjacent resource block in frequency domain. However, with pilot placement shown as in Figure 6B, the pilots (P1s and P2s) in the first two frequency tones would never collide with the pilots (P2s and P1s) in the last two frequency tones of the adjacent resource block.

Figure 6C illustrates another example, where the entire row of the first and the last frequency tones in resource block 80 are reserved to be pilot-free buffer region where no pilots are allocated. In this approach, frequency synchronization error, if only affecting the first and last frequency tones of a resource block, would not have any effect on pilot transmission. Therefore, it is a robust pattern to handle frequency synchronization error. On the other hand, because all pilots are moved away from the boundary frequency tones, they frame and enclose less data symbols. As a result, this pilot pattern design would require more channel extrapolation than the pilot pattern design illustrated in figure 6B.

Figure 8A illustrates an example of pilot pattern based on a 6x6 resource block 90 of System 1B to achieve optimal channel response estimation. In the example of Figure 8A, two data streams stream# 1 and stream#2 are transmitted by resource block 90 having six consecutive frequency tones and six consecutive time slots. As described above with respect to step 104 of Figure 5, a total number of four pilots are to be allocated, and there need to be at least two pilots along the frequency domain and at least two pilots along the time domain for each data stream within the 6x6 resource block. As illustrated in Figure 8A, according to step 105 of Figure 5, four pilots of each data stream are allocated near four corners of resource block 90 to avoid channel extrapolation for each data stream (step #1). Optimal channel response estimation is thus achieved by this novel pilot pattern design. Next, according to step 106 of Figure 5, it is further verified that, with respect to each data stream, each time slot has no more than one pilot allocated such that power fluctuation is minimized (step #3).

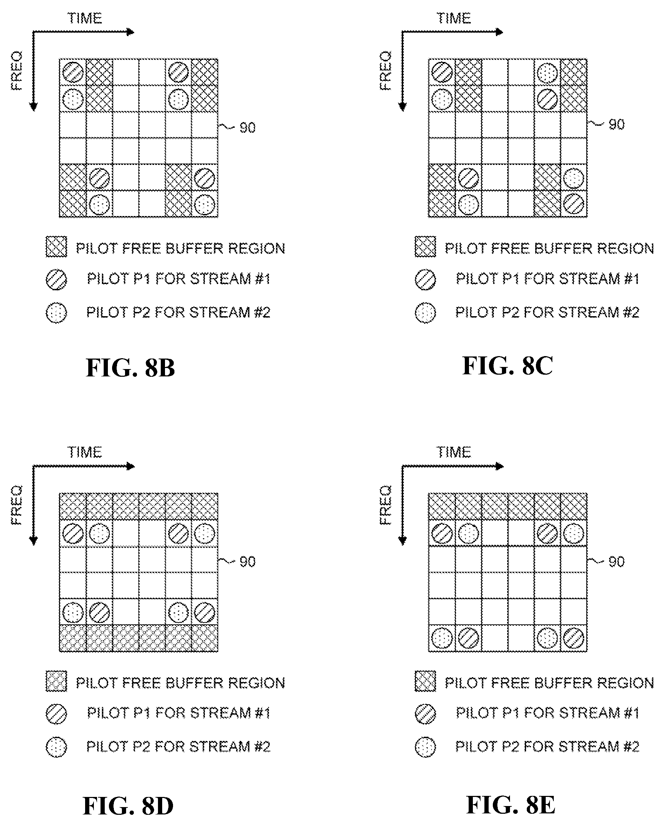

For uplink transmission, further adjustment for pilot pattern is desirable to prevent pilot collision due to multiuser synchronization error. Figure 8B, Figure 8C, Figure 8D and Figure 8E illustrate four different pilot pattern adjustment schemes. All these pilot pattern designs follow the same principle while each of them may have its own advantage over different environment. In Figure 8B, pilots at four corners are rearranged for reserving pilot-free buffer regions to avoid pilot collision due to frequency synchronization errors. More specifically, with respect to resource block 90, in the frequency direction, the top row is the smallest frequency tone, the second row from the top is the second smallest frequency tone, the second row from the bottom is the second largest frequency tone, and the bottom row has the largest frequency tone. In the time direction, the leftmost column is the smallest time slot, the second column from the left is the second smallest time slot, the second column from the right is the second largest time slot, and the rightmost column is the largest time slot. Thus, for stream#1, a first P1 is positioned at the smallest frequency tone and the smallest time slot, a second P1 is positioned at the smallest frequency tone and the second largest time slot, a third P1 is positioned at the second largest frequency tone and the second smallest time slot, and a fourth pilot P1 is positioned at the second largest frequency tone and the largest time slot. For stream#2, each pilot P2 is located at one row lower to each pilot P1 respectively. In other words, each P2 is located at the next larger frequency tone and the same time slot with respect to a corresponding P1. The middle two time slots are remained as pilot-free.

Compare to Figure 8B, pilot pattern in Figure 8C covers more frequency tones by allocating each pilot of each stream on different frequency tones. In Figure 8D, the entire top and bottom frequency tones are reserved as a pilot-free buffer region. It is therefore a very robust pattern for preventing frequency synchronization error while not optimal for avoiding channel extrapolations. Compare to Figure 8D, pilot pattern in Figure 8E reserves only the top frequency tone as pilot-free buffer region to prevent pilots collision. Therefore, this may provide a good trade-off between preventing frequency synchronization error and avoiding channel extrapolation.

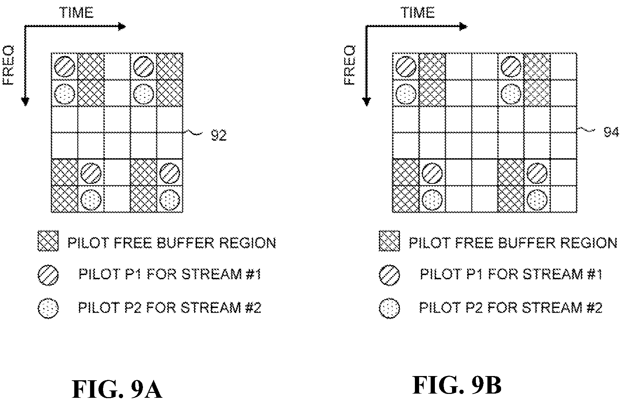

The above-illustrated novel pilot allocation schemes can be easily extended to resource blocks with different sizes. Figure 9A and 9B illustrate examples of pilot pattern in a 6x5 resource block 92 and in a 6x7 resource block 94 for uplink transmission. In the example of Figure 9A, the pilots are still positioned near four corners of resource block 92 but with a middle pilot-free time slot removed as compared to Figure 8B. In the example of Figure 9B, the pilots are positioned exactly in the same location as in Figure 8B, with the rightmost time slot carrying data only. This arrangement can minimize the changes of channel estimation coefficients, since the channel estimation coefficients of the 6x6 resource block can be used in the first six time slots of the 6x7 resource block when 6-symbol and 7-symbol resource blocks co-exist in a system.

The indices of the data streams illustrated in the above examples are in a logical sense. They can be interchanged without affecting the pilot patterns. Moreover, the MIMO pilot patterns can be directly utilized in a SISO system by removing pilots for stream# 1 or stream#2. The positions of the removed pilots are used to allocate data.

Pilot Design for Small-Size Resource Block

For pilot pattern design with reduced overhead and thus less density, channel extrapolation is inevitable and usually happens at symbols near the resource block boundaries because these symbols may have neither previous nor subsequent pilots needed for channel interpolation. This is particularly true when the size of resource block is small. Small-size resource block in general is used for uplink feedback channel and sometimes for uplink data transmission. For example, an uplink resource block may consist of as few as two consecutive sub-carriers or two consecutive OFDM symbols. As a result, it would introduce increased overhead and thus it would no longer be desirable to position four pilots near four corners within the small resource block.

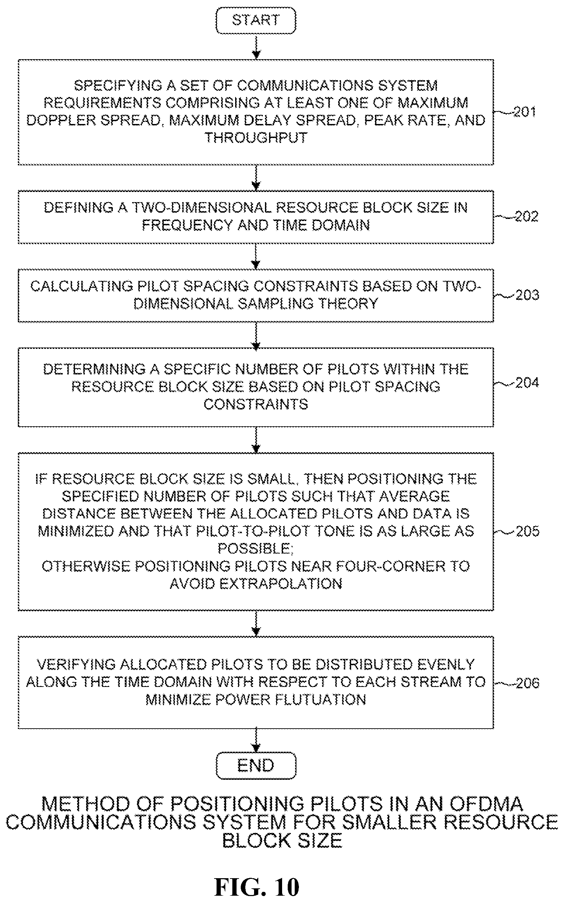

Figure 10 is a flow chart of a method of pilot pattern design based on small resource block size in accordance with a second novel aspect. As illustrated in Figure 10, the beginning steps 201 to 204 of pilot pattern design are the same as steps 101 to 104 illustrated in Figure 5. The system requirements, with three design examples, are listed in the following Table 2. In the first design example of OFDMA System 2A, a resource block of 2x6 or 6x2 in a SISO system is defined. In the second design example of OFDMA System 2B, a resource block of 4x6 or 6x4 in a two-stream MIMO system is defined. In the third example of OFDMA System 2C, a resource block of 4x6 or 6x4 in a SISO system is defined.

Based on 2D sampling theory, the maximum required pilot spacing in frequency domain is eight ($N_f$= 8) and the maximum required pilot spacing in time domain is six ($N_t$ = 6) in all three systems. Thus, for all three systems, there need to be at least two pilots in frequency direction and two pilots in time direction based on their resource block sizes. With additional system peak rate and throughput consideration, the number of pilots to be allocated for each stream within each resource block is chosen to be two in System 2A and System 2B, and to be four in System 2C.

Table 2 System Requirements

| System Parameters | System 2A | System 2B | System 2C |
|---|---|---|---|
| Type of System | SISO | MIMO | SISO |
| Number of streams | 1 | 2 | 1 |
| Center frequency | 2.5GHz | 2.5GHz | 2.5GHz |
| Bandwidth | 10MHz | 10MHz | 10MHz |
| Max channel delay spread ($\tau_{max}$); | 12$\mu$s | 12$\mu$s | 12$\mu$s |
| Max velocity (Doppler shift $f_{D,max}$); | 350km/h (810Hz) | 350km/h (810Hz) | 350km/h (810Hz) |
| Sub-carrier spacing ($\Delta$f); | 10.94kHz | 10.94kHz | 10.94kHz |
| OFDM symbol length ($T_{symbol}$); | 102.82 $\mu$s | 102.82 $\mu$s | 102.82 $\mu$s |
| Resource block size | 2x6 and 6x2 | 4x6 and 6x4 | 4x6 and 6x4 |
| Number of Pilots per stream | 2 | 2 | 4 |

Once the specific number of pilots to be allocated is determined, the pilots are then positioned at certain locations within each resource block under the rules illustrated in step 205 of Figure 10. If the resource block size is smaller than three in either frequency or time direction, then the pilots are positioned such that the average distance between the allocated pilot and data is minimize and that pilot-to-pilot distance is a large as possible. On the other hand, if the resource block size is larger than or equal to three in both frequency and time direction, then the pilots are positioned to avoid channel extrapolation.

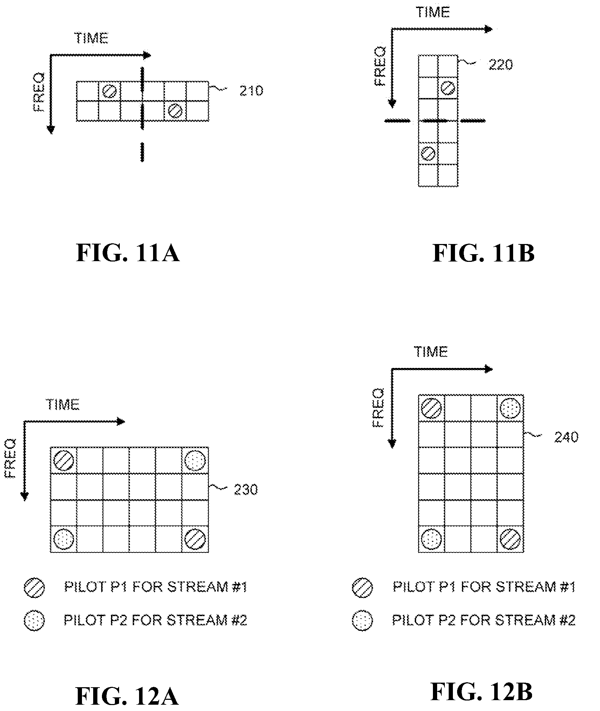

Figures 11A and 11B illustrate examples of pilot pattern design based on a 2x6 resource block and a 6x2 resource block in System 2A. In the example of Figure 11A the 2x6 resource block 210 is partitioned along the time domain into two equal size sub-blocks. Each pilot is positioned in the center time slot of each sub-block such that the average pilot-to-data distance is minimized. In addition, each pilot is positioned in different frequency tone such that pilot-to-pilot distance is as large as possible. Similarly, in the example of 11B, the 6x2 resource block 220 is partitioned along the frequency domain into two equal size sub-blocks. Each pilot is positioned in the center frequency tone of each sub-block such that the average pilot-to-data distance is minimized. In addition, each pilot is positioned in different time slot such that pilot-to-pilot distance is as large as possible. As a result, channel estimation performance can be improved.

As a general rule, for small-size resource block that is smaller than three in either frequency or time direction, if m pilots are to be allocated in a ixj resource block, then the resource block is partitioned into n equal sub-blocks where m is a multiple of n. If i is less than three and j is equal to or greater than three, then j must be a multiple of n and the ixj resource block is partitioned into n sub-blocks along the time domain. The m/n pilots are allocated in each of the partitioned sub-blocks such that average pilot-to-data distance is minimized. On the other hand, if j is less than three and i is equal to or greater than three, then i must be a multiple of n and the ixj resource block is partitioned into n sub-blocks along the frequency domain. The m/n pilots are allocated in each of the partitioned sub-blocks such that average pilot-to-data distance is minimized.

Figure 12A and 12B illustrate examples of pilot pattern design based on a 4x6 resource block 230 and a 6x4 resource block 240 in System 2B. Because the size of resource block 230 and 240 is larger than or equal to three in both frequency and time direction, the pilots are allocated such that channel extrapolation can be avoided. In the example of Figure 12A, two pilots for stream#1 is positioned diagonally at two corners of resource block 230 while two pilots for stream#2 is positioned diagonally at the other two corners of resource block 240. Similarly, in the example of Figure 12B, two pairs of pilots for stream#1 and stream#2 are positioned diagonally at four corners of resource block 240. As a result, channel extrapolation is avoided as much as possible. The indices of the two data streams illustrated in Figures 12A and 12B are in a logical sense. They can be interchanged without affecting the pilot patterns.

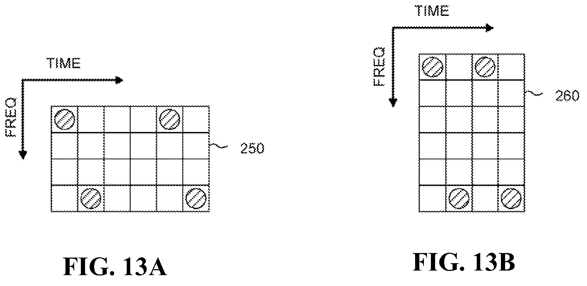

Figures 13A and 13B illustrate examples of pilot pattern design based on a 4x6 resource block 250 and a 6x4 resource block 260 in System 2C. In both examples of Figure 13A and Figure 13B, four pilots are positioned at four corners of resource block 250 and 260, respectively. In addition, two diagonal pilots are adjusted by shifting inside by one time slot such that power fluctuation caused by pilot power boosting is minimized.

Pilot Pattern Design for High-Rank MIMO System

MIMO technology has attracted attention in wireless communications systems because it offers significant increases in data throughput without additional bandwidth requirement. In a multi-antenna MIMO system, each data stream is transmitted by a corresponding antenna using the same resource block. For high-rank MIMO systems where the number of streams is at least four or more, the number of pilots to be allocated for each stream is more critical. Thus, the optimal design of pilot pattern is particularly complex in high-rank MIMO OFDMA systems. Typically, the number of pilots to be allocated for each stream is generally chosen to be not too big to achieve high throughput and at the same time not too small to obtain good channel estimation quality.

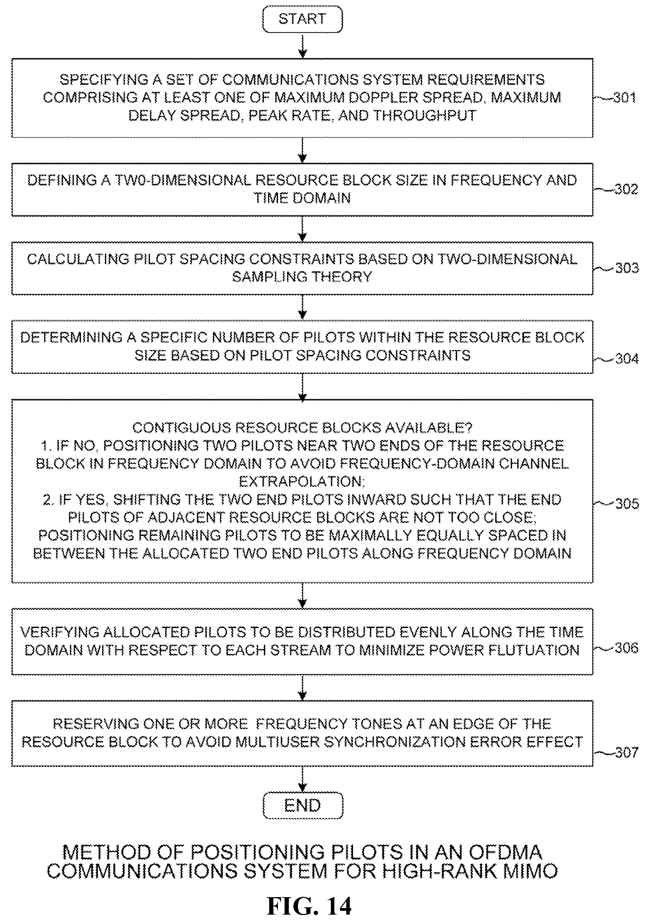

Figure 14 is a flow chart of a method of pilot pattern design in a high-rank MIMO OFDMA communications system in accordance with a third novel aspect. As illustrated in Figure 14, the beginning steps 301 to 304 of pilot pattern design are the same as steps 101 to 104 illustrated in Figure 5. The system requirements, with three design examples, are listed in the following Table 3.

Table 3 System Requirements

| System Parameters | System 3A | System 3B | System 3C |
|---|---|---|---|
| Type of System | MIMO | MIMO | MIMO |
| Number of streams | 4 | 8 | 8 |
| Peak rate | 15 bps/Hz | 30bps/Hz | 30bps/Hz |
| Max channel delay spread ($\tau_{max}$); | 10$\mu$s | 10$\mu$s | 10$\mu$s |
| Sub-carrier spacing ($\Delta$f); | 10.94kHz | 10.94kHz | 10.94kHz |
| OFDM symbol length ($T_{symbol}$); | 102.82 $\mu$s | 102.82 $\mu$s | 102.82 $\mu$s |
| Resource block size | 18x6 | 18x6 | 36x6 |
| Number of Pilots per stream | 4 | 3 | 5 |

In the first design example of OFDMA System 3A, a resource block of 18x6 in a four-stream MIMO system is defined. The number of pilots per resource block is chosen to be four in order to achieve throughput and to obtain good channel estimation quality. In the second design example of OFDMA System 3B, a resource block of 18x6 in an eight-stream MIMO system is defined and the number of pilots per resource block is chosen to be three to achieve throughput and to obtain good channel estimation quality. In the third example of OFDMA System 3C, a resource block of 36x6 in an eight-stream MIMO system is defined and the number of pilots per resource block is chosen to be five to achieve throughput and to obtain good channel estimation quality.

Once the specific number of pilots to be allocated is determined, the pilots are then positioned at certain locations within each resource block under the rules illustrated in step 305 of Figure 14. Because high-rank MIMO systems typically operate in low-mobility environment (time variation is not severe), time domain extrapolation is no longer a dominant factor. Thus, pilots are allocated to avoid channel extrapolation in frequency domain only. Two different cases are considered. In the first case, only one resource block is available for channel estimation; and in the second case, two or more adjacent resource blocks are available to be jointly used for channel estimation. As a general rule, for the first case, two pilots are first positioned near two edges of each resource block in frequency domain to avoid frequency-domain channel extrapolation. The remaining pilots are then positioned such that they are equally spaced in between the allocated two pilots along the frequency domain. For the second case, the end pilots of each resource block should be shifted inward by several frequency tones such that end pilots of resource blocks are not too close. The remaining pilots are then positioned such that they are equally spaced in between the allocated two pilots along the frequency domain.

In step 306 of Figure 14, it is further verified that with respect to each stream no more than one pilot is allocated in a time slot, so as to minimize power fluctuation. In addition, in order to avoid pilot collision due to multiuser synchronization error, when pilot symbols are allocated for uplink transmission, buffer regions are reserved at one or more edges of each resource block (step 307).

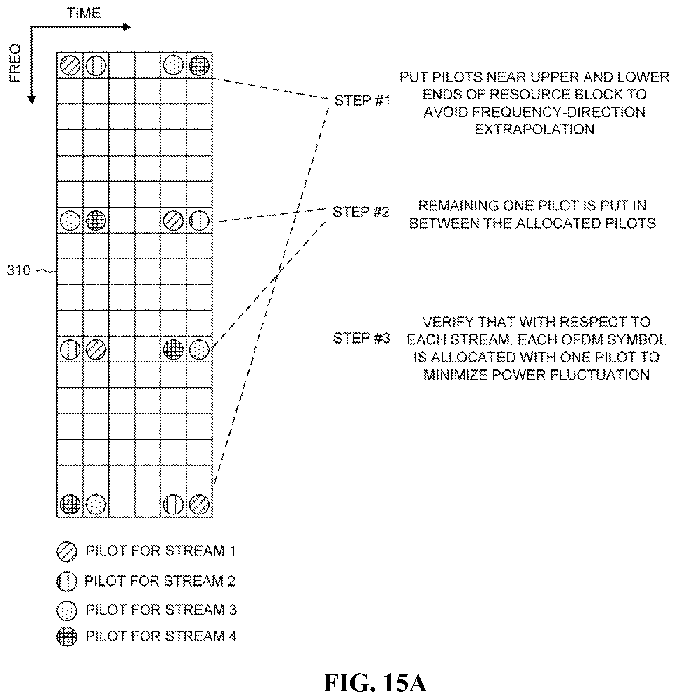

Figure 15A illustrates an example of pilot pattern design in an 18x6 resource block 310 of a four-stream MIMO OFDMA System 3A. The number of pilots to be allocated per data stream is four. As illustrated in Figure 15A, for each data stream, two pilots are positioned at the top edge and the bottom edge of resource block 310 along the frequency domain (step #1). The remaining two pilots are maximally equally spaced in between the allocated two pilots along the frequency domain (step #2). Although time-direction channel extrapolation is no longer a dominant factor, pilots are positioned as far as possible along the time domain. Thus, as illustrated in Figure 15A, no pilots are positioned in the entire two middle time slots. In the example of Figure 15A, it is further verified that with respect to each data stream, each time slot has no more than one pilot allocated such that power fluctuation is minimized (step #3).

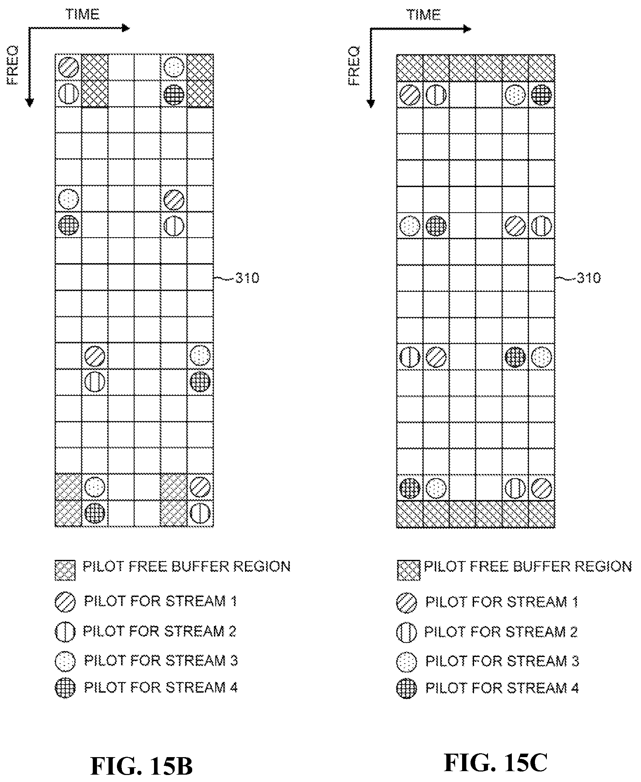

Figure 15B illustrates an example of reserving buffer regions at one or more edges of resource block 310 to reduce multiuser synchronization error effect. In the example of Figure 15B, the buffer regions adjacent to pilot tones in resource block 310 were reserved to be pilot-free where no pilots are allocated. When frequency synchronization error occurs, the first two frequency tones may interfere with the last two frequency tones of the adjacent resource block in frequency domain. However, with pilot placement shown as in Figure 15B, the pilots in the first two frequency tones would never collide with the last two frequency tones of the adjacent resource block.

Figure 15C illustrates another example, where the entire first and last frequency tones in resource block 310 are reserved to be pilot-free buffer region where no pilots are allocated. In this approach, frequency synchronization error, if only affecting the first and last frequency tones of a resource block, would not have any effect on pilot transmission. The indices of the four data streams illustrated in Figures 15A, 15B and 15C are in a logical sense. They can be interchanged without affecting the pilot patterns.

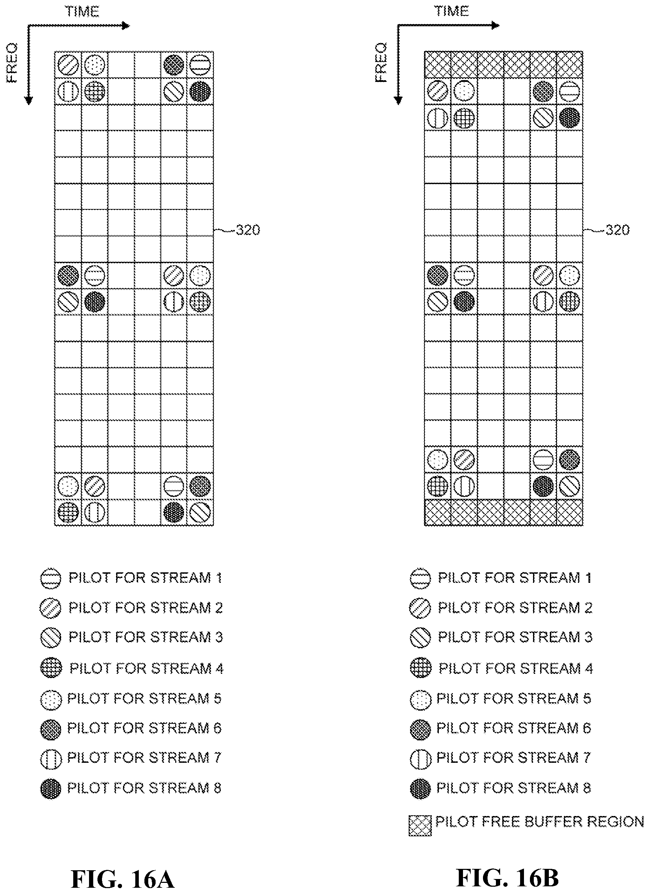

Figure 16A illustrates an example of pilot pattern design based on an 18x6 resource block 320 in an eight-stream MIMO OFDMA System 3B. The number of pilots to be allocated per data stream is three. As illustrated in Figure 16A, for each data stream, two pilots are positioned at the top edge and the bottom edge of resource block 320 along the frequency domain. The remaining one pilot is located in the middle of the allocated two pilots along the frequency domain. As illustrated in Figure 16A, pilots are positioned as far as possible along the time domain to reduce channel extrapolation. In addition, it is further verified that with respect to each data stream, each time slot has no more than one pilot allocated such that power fluctuation is minimized.

Figure 16B illustrates an example of reserving buffer regions at one or more edges of resource block 320. In the example of Figure 16B, the entire first and last frequency tones are reserved to be pilot-free buffer region where no pilots are allocated. In this approach, frequency synchronization error, if only affecting the first and last frequency tones of a resource block, would not have any effect on pilot transmission.

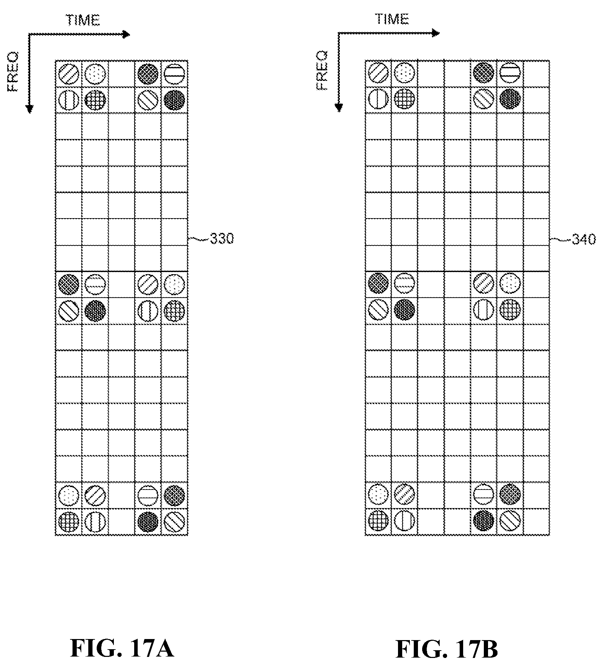

The above illustrated novel pilot pattern design can be easily extended to resource blocks with different sizes. Figure 17A illustrates an example of pilot pattern based on a 18x5 resource block 330, and Figure 17B illustrates an example of pilot pattern based on a 18x7 resource block 340. In the example of Figure 17A, the pilots are positioned under the same rule illustrated in step 305 of Figure 14. In the example of Figure 17B, the pilots are positioned exactly in the same location as in Figure 16A, with the rightmost time slot carrying data only. This arrangement can minimize the changes of channel estimation coefficients, since the channel estimation coefficients of the 18x6 resource block can be used in the first six symbols of a 18x7 resource block when two resource blocks are co-exist in a system.

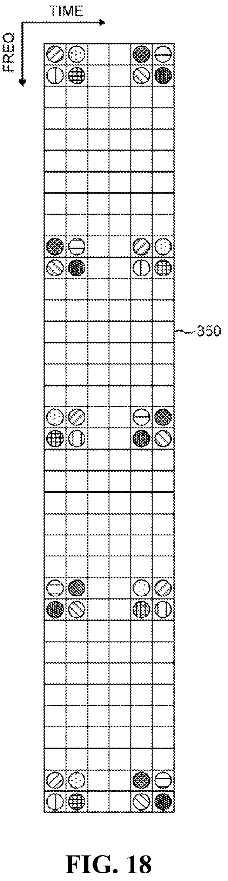

Figure 18 illustrates an example of pilot pattern design based on a 36x6 resource block 350 in an eight-stream MIMO OFDMA System 3C. The number of pilots to be allocated per data stream is five. As illustrated in Figure 18, for each data stream, two pilots are positioned at the top edge and the bottom edge of resource block 350 along the frequency domain. The remaining three pilots are equally spaced in between the allocated two pilots along the frequency domain. As illustrated in Figure 18, pilots are positioned as far as possible along the time domain to reduce channel extrapolation. In addition, it is further verified that with respect to each data stream, each time slot has no more than one pilot allocated such that power fluctuation is minimized.

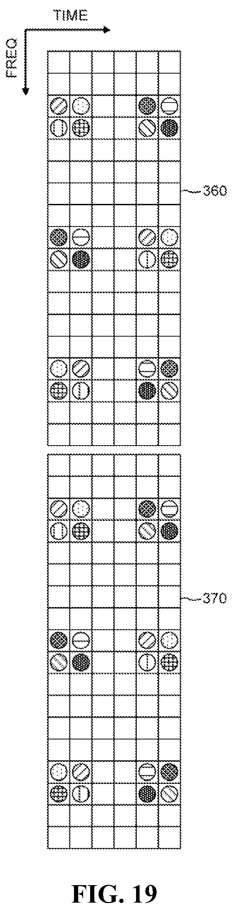

Figure 19 illustrates two continuous 18x6 resource blocks 360 and 370 in an eight-stream MIMO OFDMA System 3B. The number of pilots to be allocated per resource block and per data stream is three. In some MIMO OFDMA system environments, continuous resource blocks can be jointly used for channel estimation. As illustrated in Figure 19, two entire row of frequency tones near top edge and two entire row of frequency tones near bottom edge of resource blocks 360 and 370 are left blank. As a result, the bottom pilots of resource block 360 and the top pilots of resource block 370 are not too close to each other. This would provide better channel estimation quality when resource blocks 360 and 370 are jointly used. Figure 19 also can be extended for 36x5 and 36x7 resource blocks. For a 36x5 resource block, its corresponding pilot pattern is obtained by removing the third or fourth pilot-free symbol of Figure 19. For a 36x7 resource block, its corresponding pilot pattern is obtained by adding a pilot-free symbol right after the six symbols of Figure 19.

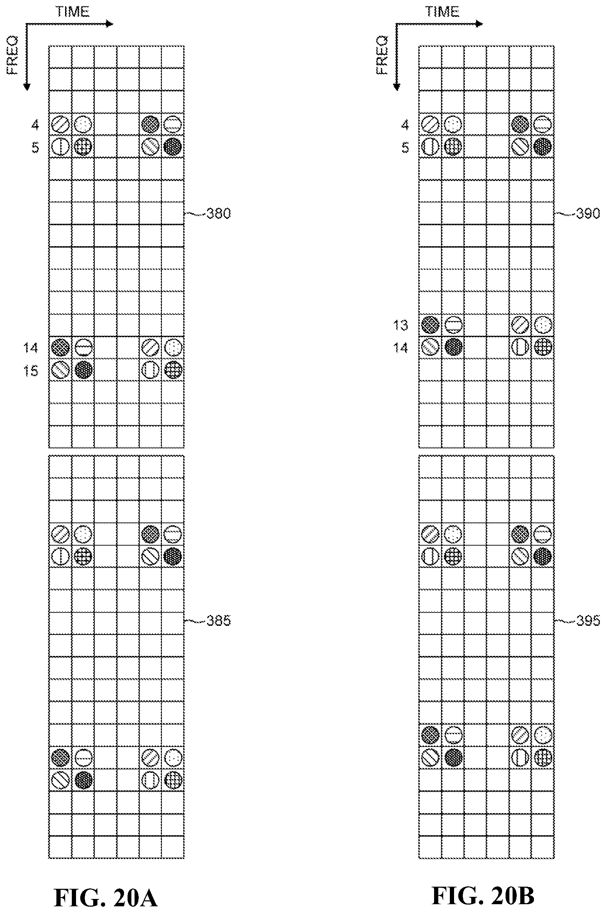

Figures 20A and 20B illustrate some other examples of jointly using continuous resource blocks for channel estimation in an eight-stream MIMO OFDMA system. In these exemplary embodiments, the number of pilots for each stream is further reduced to be two, since the pilots of adjacent resource blocks have advantage on the data-tone channel estimation in boundaries of each resource block. In the example of Figure 20A, an 18x6 resource block 380 and an 18x6 resource block 385 are adjacent to each other. Three entire rows of frequency tones near tope edge and three entire rows of frequency tones near bottom edge of resource blocks 380 and 385 are left blank. In other words, one pilot of each data stream is located in the 4th or the 5th frequency tone, and the other pilot of each data stream is located in the 14th or the 15th frequency tone. As a result, the bottom pilot in resource block 380 and the top pilots in resource block 385 maintain good distance to provide good channel estimation quality. Similarly, as illustrated in Figure 20B, an 18x6 resource block 390 and an 18x6 resource block 395 are adjacent to each other. Three entire rows of frequency tones near tope edge and four entire rows of frequency tones near bottom edge of resource blocks 390 and 395 are left blank. In other words, one pilot of each data stream is located in the 4th or the 5th frequency tone, and the other pilot of each data stream is located in the 13th or the 14th frequency tone. As a result, all the pilots of both resource blocks 390 and 395 are equally spaced along the frequency domain to provide better channel estimation quality. In addition, it should be noted that the pilot spacing of the overall pilots across the continuous resource blocks, illustrated in Figures 20A and 20B, satisfies the pilot spacing constraint derived from the 2D sampling theory. Figures 20A and 20B also can be extended for 18x5 and 18x7 resource blocks. For a 18x5 resource block, the pilot pattern is obtained by removing the third or fourth pilot-free symbol of the pilot pattern for the 18x6 resource block. For a 18x7 resource block, the pilot pattern is obtained by adding a pilot-free symbol right after the six symbol of the pilot pattern for the 18x6 resource block.

It is noted that the indices of the data streams are in a logical sense. They can be interchanged without affecting the pilot patterns. Moreover, the pilot patterns of an eight-stream MIMO system illustrated in the above examples can be directly extended to five-, six-, and seven-stream MIMO systems. For a five-stream MIMO system, the pilot positions for the sixth, seventh and eighth streams are used for allocating data rather than pilots. Similarly, for six-stream MIMO system, the pilot positions for the seventh and eighth streams are used for allocating data; and for a seven-stream MIMO system, the pilot positions for the eighth stream are used for allocating data.

In multi-antenna MIMO OFDMA systems, the transmitter transmits data through multiple transmitting antennas and the receiver receives data through multiple receiving antennas. Because each receiving antenna receives data from all the transmitting antennas, the number of channels that the signal will propagate over is the combinations of number of transmitting antennas and number of receiving antennas. For example, if there are P transmitting antennas and Q receiving antennas, then the signal will propagate over PxQ channels, each of which has its own channel response. Therefore, in MIMO OFDMA systems, a good channel estimation method is particularly crucial because of the limitation of the computational power for estimating PxQ channels. The novel pilot pattern designs described above would be significantly beneficial for MIMO OFDMA systems by maximally minimizing extrapolation and providing simple and fast channel estimation.

In MIMO systems, each transmitting antenna inserts pilot symbols into the same sub-carrier and time slot of the OFDM symbol, which it is transmitting. This introduces interference at the receiver between the pilot symbols of each transmitting antenna. In order to minimize interference between the pilot symbols of each transmitting antenna, pilot symbols are maintained orthogonal to each other among transmitting antennas. In addition, for each antenna, if pilot symbols are inserted in a specific time slot and a specific frequency tone, then other antennas put null symbols in the same location in time and frequency domain. As a result, a pilot transmitted by one antenna would not be interfered by other signals transmitted by other antennas.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

**Claims**

1. A method comprising:

   a) defining (102) a resource block in an Orthogonal Frequency Division Multiple Access, OFDMA, communications system, wherein the resource block is a two-dimensional block having an array of frequency tones along frequency domain and an array of time slots along time domain;
   b) determining (104) a specific number of pilots to be allocated within the resource block based on a set of communications system requirements;

   said method **characterized by** further comprising

   c) positioning (105) a plurality of pilots such that the specified number of the plurality of pilots is first allocated near four corners of the resource block and is then maximally evenly distributed within the resource block along both the frequency domain and the time domain,

wherein said plurality of pilots are first allocated closer to one of the four corners than to a center in a given resource block, and

wherein said plurality of pilots are then distributed at regular intervals along both the frequency domain and the time domain based on a predefined resource block size of the given resource block.

2. The method of Claim 1, wherein the specified number of pilots is at least four, and wherein the positioning in c) involves allocating four pilots of the plurality of pilots near four corners of the resource block.

3. The method of Claim 2, wherein any remaining pilots of the plurality of pilots are substantially equally spaced in between the allocated four pilots along both the frequency domain and the time domain.

4. The method of Claim 1, wherein the positioning in c) is repeated for multiple data streams, and wherein an approximately equal number of pilots are evenly distributed along the time domain with respect to each data stream.

5. The method of Claim 1, further comprising:

d) reserving (107) one or more frequency tones at one or more edges of the resource block to be pilot-free.

6. A wireless communications device, comprising:

a transmitter (20; 38,) that transmits a plurality of pilots for a data stream using a two-dimensional resource block having an array of frequency tones along frequency domain and an array of time slots along time domain; and

a pilot allocation module (16; 24) that allocates the plurality of pilots, wherein a specified number of pilots are determined based on a set of communications system requirements,

**characterized in that** the specified number of the plurality of pilots is first allocated near four corners of the resource block and is then maximally evenly distributed within the resource block along both the frequency domain and the time domain,

wherein said plurality of pilots are first allocated closer to one of the four corners than to a center in a given resource block, and

wherein said plurality of pilots are then distributed at regular intervals along both the frequency domain and the time domain based on a predefined resource block size of the given resource block.

7. The wireless communications device of Claim 6, further comprising: an antenna (22; 30; 46; 58), wherein said transmitter transmits the plurality of pilots via the antenna.

8. The wireless communications device of Claim 6 or 7, wherein the specified number of pilots is at least four, and wherein four pilots of the plurality of pilots are positioned near four corners of the resource block.

9. The wireless communications device of Claim 6 or 7, wherein the plurality of pilots with is substantially evenly distributed along the time domain.

10. The wireless communications device of Claim 6 or 7, wherein one or more frequency tones at one or more edges of the resource block are reserved to be pilot-free.

**Patentansprüche**

1. Verfahren, umfassend:

a) Definieren (102) eines Ressourcen-Blocks in einem orthogonalen Frequenzmultiplexverfahren (OFDMA) Datenübertxagungssystem, wobei der RessourcenBlock ein zweidimensionaler Block mit einem Array von Frequenztönen entlang dem Frequenzbereich und einem Array von Zeitfenstern entlang dem Zeitbereich ist;

b) Bestimmen (104) einer bestimmten Anzahl von Piloten, die innerhalb des Ressourcenblocks zugewiesen werden sollen, auf der Basis eines Satzes von Anforderungen des Datenübertragungssystems;

wobei das Verfahren **dadurch gekennzeichnet ist, dass** es weiterhin umfasst

c) Positionieren (105) einer Mehrzahl von Piloten, so dass die bestimmte Anzahl der Mehrzahl von Piloten zunächst in der Nähe von vier Ecken der Ressourcenblocks zugewiesen werden und dann möglichst gleichmäßig im Ressourcenblock sowohl entlang der Frequenzdomäne als auch entlang der Zeitdomäne verteilt werden,

wobei die Mehrzahl von Piloten zunächst näher zu einer der vier Ecken als zu einem Zentrum in einem gegebenen Ressourcenblock zuwiesen werden und

wobei die Mehrzahl von Piloten dann in regelmäßigen Abständen sowohl entlang der der Frequenzdaxnäne als auch entlang der Zeitdomäne basierend auf einer vordefinierten Ressourcenblockgröße des gegebenen Ressourcenblock verteilt werden.

2. Verfahren nach Anspruch 1, wobei die bestimmte Anzahl der Piloten mindestens vier ist und wobei die Positionierung in c) ein Zuweisen von vier Piloten der Mehrzahl der Piloten in der Nähe von vier Ecken des Ressourcenblocks beinhaltet.

3. Verfahren nach Anspruch 2, wobei jegliche verbleibenden Piloten der Mehrzahl von Piloten zwischen den zugewiesenen vier Piloten sowohl entlang der Frequenzdomäne als auch entlang der Zeitdomäne im Wesentlichen gleichmäßig zueinander beabstandet angeordnet sind.

4. Verfahren nach Anspruch 1, wobei die Positionierung in c) für mehrere Datenströme wiederholt wird und wobei eine ungefähr gleiche Anzahl von Piloten entlang der Zeitdomäne in Bezug auf jeden Datenstrom gleichmäßig verteilt wird.

5. Verfahren nach Anspruch 1, weiterein umfassend:

d) Reservieren (107) von einem oder mehreren Frequenztönen an einem oder mehreren Rändern des Ressourcenblocks, sodass diese frei von Piloten sind.

6. Drahtlose Datenübertragungsvorrichtung, umfassend:

einen Sender (20; 38), der eine Mehrzahl von Piloten für einen Datenstrom unter Verwendung eines zweidimensionalen Ressourcenblocks sendet, der einen Array von Frequenztönen entlang dem Frequenzbereich und einen Array von Zeitfenstern entlang dem Zeitbereich aufweist; und

ein Pilot-Zuweisungsmodul (16; 24), das die Mehrzahl von Piloten zuweist, wobei eine bestimmte Anzahl von Piloten auf der Basis einer Gruppe von Anforderungen des Datenübertragungssystems bestimmt wird, **dadurch gekennzeichnet, dass** die bestimmte die bestimmte Anzahl der Mehrzahl von Piloten zunächst in der Nähe von vier Ecken der Ressourcenblocks zugewiesen werden und dann möglichst gleichmäßig im Ressourcenblock sowohl entlang der Frequenzdomäne als auch entlang der Zeitdomäne verteilt werden,

wobei die Mehrzahl von Piloten zunächst näher zu einer der vier Ecken als zu einem Zentrum in einem gegebenen Ressourcenblock zuwiesen werden und

wobei die Mehrzahl von Piloten dann in regelmäßigen Abständen sowohl entlang der der Frequenzdomäne als auch entlang der Zeitdomäne basierend auf einer vordefinierten Ressourcenblockgröße des gegebenen Ressourcenblock verteilt werden.

7. Drahtlose Datenübertragungsvorrichtung nach Anspruch 6, weiterhin umfassend: eine Antenne (22; 30; 46; 58), wobei der Sender die Mehrzahl der Piloten über die Antenne sendet.

8. Drahtlose Datenübertragungsvorrichtung nach Anspruch 6 oder 7, wobei die bestimmte Anzahl der Piloten mindestens vier ist, und wobei vier Piloten der Mehrzahl der Piloten in der Nähe von vier Ecken des Ressourcenblocks positioniert werden.

9. Drahtlose Datenübertragungsvorrichtung nach Anspruch 6 oder 7, wobei die Mehrzahl von Piloten entlang des Zeitbereichs im Wesentlichen gleichmäßig verteilt angeordnet sind.

10. Drahtlose Datenübertragungsvorrichtung nach Anspruch 6 oder 7, wobei ein Frequenzton oder mehrere Frequenztöne an einem oder mehreren Rändern des Ressourcenblocks reserviert werden, sodass diese frei von Piloten sind.

**Revendications**

1.  Un procédé comprenant :

    a) la définition (102) d'un bloc de ressource dans un système de communication par accès multiple par division de fréquences orthogonales, OFDM, dans lequel le bloc de ressources est un bloc à deux dimension ayant une zone de tonalités fréquentielles le long d'un domaine de fréquence et une zone de créneaux temporels le long d'un domaine temporel ;
    b) la détermination (104) d'un nombre spécifique de pilotes devant être alloués au sein du bloc de ressources sur la base d'un jeu de critères d'un system de communications ;

    ledit procédé étant **caractérisé en ce qu'**il comporte en outre :

    c) le positionnement (105) d'une pluralité de pilotes de telle façon que le nombre spécifié de la pluralité de pilotes est d'abord alloué proche de quatre coins du bloc de ressources et est ensuite distribué de manière homogène au sein du bloc de ressources le long du domaine fréquentiel aussi bien que temporel,

    dans lequel ladite pluralité de pilotes st d'abord allouée plus proche de l'un des quatre coins que du centre dans un bloc de ressources donné, et
    dans lequel ladite pluralité de pilotes est ensuite distribuée à des intervalles réguliers le long de domaine fréquentiel mais aussi temporel sur la base d'une dimension de bloc de ressource prédéfinie du bloc de ressources donné.

2.  Le procédé de la revendication 1, dans lequel le nombre spécifié de pilotes est au moins égal à quatre, et dans lequel le positionnement dans c) implique l'affectation de quatre pilotes de la pluralité de pilotes proches des quatre coins du bloc de ressource.

3.  Le procédé de la revendication 2, dans lequel tous les pilotes restants parmi la pluralité de pilotes sont substantiellement espacés de manière égale entre les quatre pilotes affectés le long du domaine fréquentiel et du domaine temporel.

4.  Le procédé de la revendication 1, dans lequel le positionnement dans c) est répété pour de multiples flux de données, et dans lequel un nombre de pilotes approximativement égal à 4 sont distribués de manière homogène le long du domaine temporel relativement à chaque flux de données.

5.  Le procédé de la revendication 1, comprenant en outre :

    d) la réservation (107) d'une ou plusieurs tonalités fréquentielles à un ou plusieurs côtés du bloc de ressources libre de pilote.

6.  Un dispositif de communication sans fil, comprenant :

    un transmetteur (20 ; 38) transmettant une pluralité de pilotes pour un flux de donnée en utilisant un bloc de ressources à deux dimensions ayant une zone de tonalités fréquentielle le long d'un domaine de fréquence et une zone de créneaux temporels le long d'un domaine temporel ; et
    un module d'affectation de pilote (16 ; 24) affectant la pluralité de pilotes, dans lequel un nombre spécifié de pilotes est déterminé sur la base d'un ensemble de critères d'un système de communications,
    **caractérisé en ce que** le nombre spécifié de la pluralité de pilotes est d'abord alloué proche des quatre coins du bloc de ressources et est ensuite distribué au maximum de manière homogène au sein du bloc de ressources le long du domaine fréquentiel mais aussi temporel,

    dans lequel ladite pluralité de pilotes est d'abord allouée plus proche de l'un des quatre coins que du centre dans un bloc de ressources donné, et
    dans lequel ladite pluralité de pilotes est ensuite distribuée à des intervalles réguliers le long de domaine fréquentiel mais aussi temporel sur la base d'une dimension de bloc de ressource prédéfinie du bloc de ressources donné.

7.  Le dispositif de communications sans fil de la revendication 6, comprenant en outre : une antenne (22 ; 30; 46 ; 58) dans lequel ledit transmetteur transmet la pluralité de pilotes via l'antenne.

8. Le dispositif de communications sans fil de la revendication 6 ou 7, dans lequel le nombre spécifié de pilotes est au moins égal à quatre, et dans lequel quatre pilotes de la pluralité des pilotes sont positionnés proches des quatre coins du bloc de ressource.

9. Le dispositif de communications sans fil de la revendication 6 ou 7, dans lequel la pluralité de pilotes est distribuée de manière substantiellement homogène le long du domaine temporel.

10. Le dispositif de communications sans fil de la revendication 6 ou 7, dans lequel une ou plusieurs tonalités fréquentielles disposées à une ou plusieurs cotés du bloc de ressources sont réservés libres de pilote.

**FIG. 1**

**FIG. 2**

**FIG. 3**

UPLINK - MS TRANSMITS
AND BS RECEIVES

**FIG. 4A**

DOWNLINK: BS TRANSMITS
AND MS RECEIVES

**FIG. 4B**

START

SPECIFYING A SET OF COMMUNICATIONS SYSTEM REQUIREMENTS COMPRISING AT LEAST ONE OF MAXIMUM DOPPLER SPREAD, MAXIMUM DELAY SPREAD, PEAK RATE, AND THROUGHPUT —101

DEFINING A TWO-DIMENSIONAL RESOURCE BLOCK SIZE IN FREQUENCY AND TIME DOMAIN —102

CALCULATING PILOT SPACING CONSTRAINTS BASED ON TWO-DIMENSIONAL SAMPLING THEORY —103

DETERMINING A SPECIFIC NUMBER OF PILOTS WITHIN THE RESOURCE BLOCK SIZE BASED ON PILOT SPACING CONSTRAINTS —104

POSITIONING FOUR PILOTS NEAR FOUR CORNERS OF THE RESOURCE BLOCK TO AVOID CHANNEL EXTRAPOLATION; POSITIONING REMAINING PILOTS TO BE MAXIMALLY EQUALLY SPACED IN BETWEEN THE ALLOCATED FOUR PILOTS ALONG BOTH FREQUENCY DOMAIN AND TIME DOMAIN —105

VERIFYING ALLOCATED PILOTS TO BE DISTRIBUTED EVENLY ALONG THE TIME DOMAIN WITH RESPECT TO EACH STREAM TO MINIMIZE POWER FLUTUATION —106

RESERVING ONE OR MORE FREQUENCY TONES AT AN EDGE OF THE RESOURCE BLOCK TO AVOID MULTIUSER SYNCHRONIZATION ERROR —107

END

METHOD OF POSITIONING PILOTS IN AN OFDMA COMMUNICATIONS SYSTEM

**FIG. 5**

TIME

FREQ

STEP #1 PUT PILOTS NEAR FOUR CORNERS
OF RESOURCE BLOCK TO AVOID
EXTRAPOLATION

STEP #2 REMAINING TWO PILOTS ARE PUT IN
BETWEEN THE ALLOCATED PILOTS

VERIFY THAT WITH RESPECT TO
STEP #3 EACH STREAM, EACH OFDM SYMBOL
IS ALLOCATED WITH ONE PILOT TO
MINIMIZE POWER FLUCTUATION

80

⊘ PILOT P1 FOR STREAM #1

⊙ PILOT P2 FOR STREAM #2

**FIG. 6A**

FIG. 6B

FIG. 6C

USER 1

USER 2

PILOT COLLISION
IS CAUSED BY MULTIUSER
SYNCHRONIZATION ERROR

**FIG. 7**

TIME

FREQ

90

STEP #1
PUT PILOTS NEAR FOUR
CORNERS OF RESOURCE BLOCK
TO AVOID EXTRAPOLATION

STEP #3
VERIFY THAT WITH RESPECT TO
EACH STREAM, EACH OFDM
SYMBOL IS ALLOCATED WITH
ONE PILOT TO MINIMIZE POWER
FLUCTUATION

PILOT P1 FOR STREAM #1

PILOT P2 FOR STREAM #2

**FIG. 8A**

FIG. 8B

FIG. 8C

FIG. 8D

FIG. 8E

**FIG. 9A**

**FIG. 9B**

START

SPECIFYING A SET OF COMMUNICATIONS SYSTEM
REQUIREMENTS COMPRISING AT LEAST ONE OF MAXIMUM
DOPPLER SPREAD, MAXIMUM DELAY SPREAD, PEAK RATE, AND
THROUGHPUT
— 201

DEFINING A TWO-DIMENSIONAL RESOURCE BLOCK SIZE IN
FREQUENCY AND TIME DOMAIN
— 202

CALCULATING PILOT SPACING CONSTRAINTS BASED ON TWO-
DIMENSIONAL SAMPLING THEORY
— 203

DETERMINING A SPECIFIC NUMBER OF PILOTS WITHIN THE
RESOURCE BLOCK SIZE BASED ON PILOT SPACING
CONSTRAINTS
— 204

IF RESOURCE BLOCK SIZE IS SMALL, THEN POSITIONING THE
SPECIFIED NUMBER OF PILOTS SUCH THAT AVERAGE
DISTANCE BETWEEN THE ALLOCATED PILOTS AND DATA IS
MINIMIZED AND THAT PILOT-TO-PILOT TONE IS AS LARGE AS
POSSIBLE;
OTHERWISE POSITIONING PILOTS NEAR FOUR-CORNER TO
AVOID EXTRAPOLATION
— 205

VERIFYING ALLOCATED PILOTS TO BE DISTRIBUTED EVENLY
ALONG THE TIME DOMAIN WITH RESPECT TO EACH STREAM TO
MINIMIZE POWER FLUTUATION
— 206

END

METHOD OF POSITIONING PILOTS IN AN OFDMA
COMMUNICATIONS SYSTEM FOR SMALLER RESOURCE
BLOCK SIZE

**FIG. 10**

**FIG. 11A**

**FIG. 11B**

⊘ PILOT P1 FOR STREAM #1

⊙ PILOT P2 FOR STREAM #2

⊘ PILOT P1 FOR STREAM #1

⊙ PILOT P2 FOR STREAM #2

**FIG. 12A**

**FIG. 12B**

**FIG. 13A**

**FIG. 13B**

START

SPECIFYING A SET OF COMMUNICATIONS SYSTEM REQUIREMENTS COMPRISING AT LEAST ONE OF MAXIMUM DOPPLER SPREAD, MAXIMUM DELAY SPREAD, PEAK RATE, AND THROUGHPUT ~301

DEFINING A TW0-DIMENSIONAL RESOURCE BLOCK SIZE IN FREQUENCY AND TIME DOMAIN ~302

CALCULATING PILOT SPACING CONSTRAINTS BASED ON TWO-DIMENSIONAL SAMPLING THEORY ~303

DETERMINING A SPECIFIC NUMBER OF PILOTS WITHIN THE RESOURCE BLOCK SIZE BASED ON PILOT SPACING CONSTRAINTS ~304

CONTIGUOUS RESOURCE BLOCKS AVAILABLE?
1. IF NO, POSITIONING TWO PILOTS NEAR TWO ENDS OF THE RESOURCE BLOCK IN FREQUENCY DOMAIN TO AVOID FREQUENCY-DOMAIN CHANNEL EXTRAPOLATION;
2. IF YES, SHIFTING THE TWO END PILOTS INWARD SUCH THAT THE END PILOTS OF ADJACENT RESOURCE BLOCKS ARE NOT TOO CLOSE; POSITIONING REMAINING PILOTS TO BE MAXIMALLY EQUALLY SPACED IN BETWEEN THE ALLOCATED TWO END PILOTS ALONG FREQUENCY DOMAIN ~305

VERIFYING ALLOCATED PILOTS TO BE DISTRIBUTED EVENLY ALONG THE TIME DOMAIN WITH RESPECT TO EACH STREAM TO MINIMIZE POWER FLUTUATION ~306

RESERVING ONE OR MORE FREQUENCY TONES AT AN EDGE OF THE RESOURCE BLOCK TO AVOID MULTIUSER SYNCHRONIZATION ERROR EFFECT ~307

END

METHOD OF POSITIONING PILOTS IN AN OFDMA COMMUNICATIONS SYSTEM FOR HIGH-RANK MIMO

FIG. 14

TIME

FREQ

310

STEP #1   PUT PILOTS NEAR UPPER AND LOWER ENDS OF RESOURCE BLOCK TO AVOID FREQUENCY-DIRECTION EXTRAPOLATION

STEP #2   REMAINING ONE PILOT IS PUT IN BETWEEN THE ALLOCATED PILOTS

STEP #3   VERIFY THAT WITH RESPECT TO EACH STREAM, EACH OFDM SYMBOL IS ALLOCATED WITH ONE PILOT TO MINIMIZE POWER FLUCTUATION

PILOT FOR STREAM 1
PILOT FOR STREAM 2
PILOT FOR STREAM 3
PILOT FOR STREAM 4

**FIG. 15A**

FIG. 15B

FIG. 15C

PILOT FOR STREAM 1
PILOT FOR STREAM 2
PILOT FOR STREAM 3
PILOT FOR STREAM 4
PILOT FOR STREAM 5
PILOT FOR STREAM 6
PILOT FOR STREAM 7
PILOT FOR STREAM 8

**FIG. 16A**

PILOT FOR STREAM 1
PILOT FOR STREAM 2
PILOT FOR STREAM 3
PILOT FOR STREAM 4
PILOT FOR STREAM 5
PILOT FOR STREAM 6
PILOT FOR STREAM 7
PILOT FOR STREAM 8
PILOT FREE BUFFER REGION

**FIG. 16B**

**FIG. 17A**          **FIG. 17B**

**FIG. 18**

FIG. 19

**FIG. 20A**

**FIG. 20B**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060120272 A
- US 20060285484 A
- US 20060209732 A
- US 20070195688 A
- US 2007040703 A